# EUROPÄISCHE PATENTSCHRIFT

(11) **EP 4 242 064 B1**
(45) Veröffentlichungstag und Bekanntmachung des Hinweises auf die Patenterteilung: **19.03.2025**
(21) Anmeldenummer: 22187397.9
(22) Anmeldetag: 28.07.2022
(51) Int. Cl.: B60R 9/058, B60R 9/052

(54) **LASTTRÄGERSYSTEM SOWIE KLEMMFUSS FÜR EIN LASTTRÄGERSYSTEM**
LOAD CARRIER SYSTEM AND CLAMPING BASE FOR A LOAD CARRIER SYSTEM
SYSTÈME DE PORTE-CHARGE, AINSI QUE PIED DE SERRAGE POUR SYSTÈME DE PORTE-CHARGE

(30) Priorität: 10.03.2022 DE 102022202435
(43) Veröffentlichungstag der Anmeldung: 13.09.2023
(73) Patentinhaber: Compartment Engineering Freital GmbH, 01257 Dresden (DE)
(72) Erfinder: König, Maik, 01809 Heidenau (DE)
(74) Vertreter: Dr. Solf & Zapf Patent- und Rechtsanwalts PartG mbB

(56) Entgegenhaltungen:
- CN-A- 112 424 026
- DE-A1- 102014 208 683
- US-A- 5 275 320
- US-A1- 2016 332 581
- US-B2- 9 085 266

## Beschreibung

Die Erfindung betrifft ein Lastträgersystem für ein Fahrzeug, insbesondere ein Kraftfahrzeug mit einer Dachreling. Das Lastträgersystem weist eine Mehrzahl an Klemmfüßen zur Befestigung im Dachbereich des Fahrzeugs, insbesondere an einer Dachreling, auf. Jeder Klemmfuß weist einen Grundkörper sowie mindestens einen Anlagebereich zur Anlage an der Dachreling des Fahrzeugs auf. An dem Grundkörper ist mindestens ein Spannbolzen angeordnet. Ferner betrifft die Erfindung einen Klemmfuß für ein Lastträgersystem.

Lastträgersysteme sind im Stand der Technik in einer Vielzahl von Ausgestaltungen bekannt. Lastträgersysteme weisen üblicherweise mindestens vier Klemmfüße und zwei Querträger auf. An jedem Ende eines Querträgers ist jeweils ein Klemmfuß zur Befestigung am Dach oder an einer Dachreling angeordnet. Die Anordnung am Fahrzeug erfolgt üblicherweise derart, dass die Querträger das Dach in einer Richtung quer zur Fahrtrichtung des Fahrzeugs überspannen. An den Querträgern ist eine Last dann unmittelbar befestigbar. Alternativ dazu gibt es Lastträgersysteme, die eine Bodenplatte aufweisen, so dass eine Last auf der Bodenplatte befestigbar ist. Ferner sind Lastträgersysteme bekannt, die eine Dachbox, insbesondere mit einer Bodenplatte, aufweisen, bei denen eine Last in der Dachbox anordenbar und/oder an der Bodenplatte der Dachbox befestigbar ist.

So beschreibt US 5 275 320 A einen Dachträger für Fahrzeuge mit einer entfernbaren Klemmanordnung. Diese Klemmanordnung ist mittels einer Spannschraube aktivierbar.

Auch US 2016/332 581 A1 beschreibt eine Klemmanordnung mit einer Spannschraube. Diese Schraube kann über ein Nockenelement um ihren Einschraubpunkt geschwenkt werden.

Aus CN 112 424 026 A ist ein Lastträgersystem bekannt, das einen Querbalken mit einem sich in Längsrichtung erstreckenden Schlitz aufweist, durch den eine Schraube zu einer Anschlagfläche geführt wird.

DE 10 2014 208 683 A1 ist auf eine Dachträgeranordnung gerichtet, bei der bewegliche Klemmbacken einen Stützkörper umfassen. Diese Klemmbacken können über eine manuell bedienbare Stelleinheit gespannt und gelöst werden.

Die US 9 085 266 B2 beschreibt eine Spannvorrichtung mit einem Befestigungselement mit einem ersten und einem zweiten Klemmabschnitt. Diese Klemmabschnitte sind korrespondierend miteinander und sind zueinander beweglich.

Die aus dem Stand der Technik bekannten Lastträgersysteme weisen den Nachteil auf, dass sie üblicherweise sehr hochbauend sind, also im Montagezustand einen großen Abstand zur Oberfläche des Daches aufweisen. Dies ist sowohl aus aerodynamischen als auch aus fahrdynamischen Gesichtspunkten nachteilig.

Der vorliegenden Erfindung liegt daher die Aufgabe zu Grunde, ein Lastträgersystem sowie einen Klemmfuß für ein Lastträgersystem anzugeben, mit denen im Montagezustand der Abstand zur Dachoberfläche minimiert ist.

Die vorgenannte Aufgabe ist bei einem gattungsgemäßen Lastträgersystem gemäß dem Kennzeichnungsteil des Anspruchs 1 dadurch gelöst, dass der Spannbolzen an einer ersten Endseite verschiebbar an dem Grundkörper gehalten ist. Vorzugsweise ist die Lagerstelle der ersten Endseite des Spannbolzens in dem Grundkörper angeordnet. An der zweiten Endseite des Spannbolzens ist ein Spannwinkel angeordnet, so dass zwischen dem Spannwinkel und dem Anlagebereich eine Dachreling verspannbar ist.

Der Grundkörper des Klemmfußes weist einen Anlagebereich zur Anlage an einer Dachreling eines Fahrzeugs auf. Der Anlagebereich ist vorzugsweise zumindest teilweise gewölbt ausgebildet, so dass er vorteilhaft an den üblicherweise gewölbten Dachrelings anlegbar ist. Die Länge des Spannbolzens ist einstellbar, so dass eine Spannkraft von dem Spannwinkel und dem Anlagebereich auf eine Dachreling bewirkbar ist.

Der Anlagebereich und der Spannwinkel sind vorteilhaft derart ausgebildet, dass der Klemmfuß an geschlossenen Dachrelings montierbar ist. Eine geschlossene Dachreling zeichnet sich dadurch aus, dass zwischen Dachoberfläche und Dachreling keine Öffnung ausgebildet ist. Die Dachreling erstreckt sich folglich unmittelbar in bzw. auf der Dachoberfläche. Der Klemmfuß, insbesondere die Anlagefläche und der Spannwinkel sind derart ausgebildet, dass die Dachreling nicht vollständig umgriffen werden muss, sondern dass bei einem seitlichen Anliegen bzw. teilweisen unterseitigen Untergreifen der Dachreling eine ausreichende Kraftübertragung erfolgt.

An den Anlagebereich schließt sich ein Verbindungsbereich an, in dem der Grundkörper beispielsweise mit einem Querträger verbindbar ist. Insbesondere weist der Verbindungsbereich einen Außenquerschnitt auf, beispielsweise rechteckig, der dem Innenquerschnitt des Querträgers entspricht, so dass der Verbindungsbereich in einen Querträger einschiebbar ist. Der Querträger weist vorzugsweise einen quadratischen oder rechteckigen Innenquerschnitt auf. Der Verbindungsbereich erstreckt sich vorzugsweise mindestens oder genau über etwa zwei Drittel der Länge des Klemmfußes. Der Grundkörper ist vorzugsweise mittels Spritzgießen oder einem additiven Fertigungsverfahren, beispielsweise 3D-Druck, hergestellt. Der Grundkörper ist zumindest teilweise aus einem Kunststoff hergestellt, insbesondere aus einem glasfaserverstärkten Kunststoff, beispielsweise einem Kunststoff mit mindestens 30 % Glasfaseranteil.

Mit dem Grundkörper ist vorzugsweise mindestens ein Spannbolzen verbunden. Der Spannbolzen ist mit einer ersten Endseite verschiebbar in dem Grundkörper gehalten. "Verschiebbar" bedeutet in diesem Zusammenhang, dass durch das Verschieben die Position der ersten Endseite, also der Lagerstelle der ersten Endseite, innerhalb des Grundkörpers verändert wird. Der Grundkörper weist beispielsweise mindestens einen Befestigungshohlraum auf, der die Grenzen für die Verschiebbarkeit des Spannbolzens, insbesondere der Lagerstelle an der ersten Endseite, definiert. Der Spannbolzen ist vorzugsweise derart angeordnet, dass er an seiner ersten Endseite translatorisch innerhalb des Grundkörpers verschiebbar ist.

Vorteilhaft ist vorgesehen, dass der Spannbolzen entlang mindestens einer Geraden translatorisch bewegbar ist. Alternativ dazu ist auch vorgesehen, dass die erste Endseite entlang einer spline- oder kurvenförmigen Bahn bewegbar ist. Beispielsweise ist der Spannbolzen in Bezug auf eine Höhenrichtung (x-Richtung) des Grundkörpers in der Montageposition innerhalb des Grundkörpers bewegbar. Es ist allerdings auch vorgesehen, dass der Spannbolzen in eine Seitenrichtung (z-Richtung) in Bezug auf den Grundkörper und/oder eine Tiefenrichtung (y-Richtung) in Bezug auf den Grundkörper bewegbar gehalten ist. Bevorzugt ist vorgesehen, dass der Spannbolzen lediglich in einer Höhenrichtung des Grundkörpers translatorisch bewegbar ist. Die Höhenrichtung ist im üblichen Montagezustand des Klemmfußes an einem Fahrzeug von oben nach unten ausgerichtet.

Die Lagerstelle des Spannbolzens ist vorzugsweise derart verschiebbar, dass beim Verschieben der ersten Endseite des Spannbolzens - der Lagerstelle - von einer ersten Endlage in eine zweite Endlage mindestens die Hälfte der Höhe des Klemmfußes, vorzugsweise zwei Drittel der Höhe, überstrichen wird.

An der zweiten Endseite des Spannbolzens ist ein Spannwinkel mit dem Spannbolzen derart verbunden, dass zwischen dem Spannwinkel und dem Anlagebereich des Grundkörpers eine Dachreling verspannbar ist, um den Klemmfuß an der Dachreling zu befestigen. Im Montagezustand wird folglich eine im Wesentlichen diagonal orientierte Spannkraft zwischen Spannwinkel und Anlagebereich von dem Spannbolzen auf den Grundkörper übertragen. Der Spannbolzen und/oder der Spannwinkel sind vorzugsweise aus einem Metall hergestellt, vorzugsweise aus einem rostfreien Metall, insbesondere aus einem rostfreien Stahl.

Das Lastträgersystem umfasst vorzugsweise mindestens eine Bodenplatte, die an zwischen den Klemmfüßen angeordneten Querträgern befestigbar ist. Vorzugsweise ist die Bodenplatte mit den Querträgern vernietet bzw. vernietbar oder verschraubt bzw. verschraubbar. Die Bodenplatte weist eine derartige Form auf, dass sie insbesondere die Dachreling des Fahrzeugs übergreift. Insbesondere liegt die Bodenplatte lediglich im Bereich der Frontscheibe an dem Fahrzeug an und ist vorteilhaft ansonsten umlaufend beabstandet zum Fahrzeugdach. Weiter vorzugsweise ist vorgesehen, dass die Bodenplatte die Bodenplatte einer Dachbox ist, wobei mit der Bodenplatte der Dachbox ein Deckelelement verbindbar ist. Das Deckelelement ist vorzugsweise verschwenkbar mit der Bodenplatte verbindbar bzw. verbunden. Die Bodenplatte ist an den Querträgern des Lastträgersystems befestigbar. An der Bodenplatte ist das Deckelelement, vorteilhaft schwenkbar, befestigbar. Beispielsweise ist das Deckelelement über schwenkbare Deckelstützen mit der Bodenplatte verbindbar.

Insbesondere ist vorgesehen, dass die Länge der aus Bodenplatte und Deckelelement gebildeten Dachbox einstellbar ist, insbesondere indem das Deckelelement und die Bodenplatte mindestens eine Trennfuge aufweisen, an der die Bodenplatte und das Deckelelement auf die gewünschte Länge abgelängt werden können, so dass die jeweils beiden Elemente dann mittels Kleben zusammengefügt werden können. Auf diese Weise kann die Länge der Bodenplatte und/oder der Dachbox auf die Fahrzeuglänge individuell eingestellt werden.

Das Lastträgersystem weist vorzugsweise mindestens, insbesondere genau, vier, mindestens sechs, insbesondere genau sechs, oder mindestens acht, insbesondere genau acht, Klemmfüße auf.

Beispielsweise ist vorgesehen, dass das Lastträgersystem mindestens vier, insbesondere genau vier, Klemmfüße und mindestens zwei, insbesondere genau zwei, Auflagefüße, oder mindestens vier, insbesondere genau vier, Auflagefüße aufweist. Die Auflagefüße dienen lediglich der Stabilisierung und liegen im Montagezustand an der Dachreling an. Vorzugsweise sind die Auflagefüße im Wesentlichen wie die Klemmfüße ausgebildet, mit der Ausnahme, dass keine Spannbolzen vorhanden sind. Ferner ist auch vorgesehen, dass das Lastträgersystem mindestens sechs, insbesondere genau sechs, Klemmfüße und mindestens zwei, insbesondere genau zwei, Auflagefüße aufweist.

Die Erfindung weist gegenüber den aus dem Stand der Technik bekannten Lastträgersystemen den Vorteil auf, dass die Klemmfüße aufgrund der Verschiebbarkeit des Spannbolzens sehr flachbauend konstruiert sind, wodurch das Lastträgersystem im Montagezustand nur einen sehr geringen Abstand zum Dach des Fahrzeuges aufweist, was sich vorteilhaft auf die Aerodynamik und - durch den geringen Schwerpunkt - auf die Fahrdynamik des Fahrzeuges auswirkt. Die Verschiebbarkeit des Spannbolzens gewährleistet zudem vorteilhafte Anpassbarkeit an Dachrelings mit unterschiedlichen Querschnitten.

Gemäß einer Ausgestaltung des Lastträgersystems ist vorgesehen, dass der Spannbolzen zumindest an seiner ersten Endseite verschwenkbar gehalten ist. Der Spannbolzen ist beispielsweise in Höhenrichtung und/oder in Seitenrichtung verschwenkbar gehalten. Vorzugsweise ist vorgesehen, dass der Spannbolzen nur in Höhenrichtung verschwenkbar gehalten ist. Vorzugsweise ist vorgesehen, dass der Spannbolzen in einer gedachten Schwenkebene verschwenkbar ist. Vorzugsweise beinhaltet die Schwenkebene die Höhenrichtung. Besonders bevorzugt ist der Spannbolzen an einer Endseite verschwenkbar und verschiebbar in dem Grundkörper gelagert. Dadurch wird die Montage vereinfacht und die Anpassung an verschiedene Dachrelingformen ermöglicht.

Als besonders vorteilhaft hat sich gemäß einer weiteren Ausgestaltung des Lastträgersystems herausgestellt, wenn vorgesehen ist, dass der Spannbolzen an seiner ersten Endseite in einem Winkelbereich von mindestens 30°, insbesondere mindestens 45°, bevorzugt mindestens 60°, verschwenkbar ist. Es ist vorgesehen, dass sich der Winkelbereich - aufgrund der Verschiebbarkeit der ersten Endseite - auf unterschiedliche Positionen der ersten Endseite in dem Grundkörper beziehen kann. Der gesamte Winkelbereich muss folglich nicht in jeder Position abdeckbar sein, sondern der gesamte Winkelbereich kann auch erst durch eine Verschiebung erreichbar sein. Der von dem Spannbolzen, insbesondere in einer Schwenkebene, überstreichbare Winkel beträgt vorzugsweise mindestens 30°, insbesondere mindestens 45°, besonders bevorzugt mindestens 60°. Eine Weiterbildung sieht zudem vor, dass der Spannbolzen in einem Winkelbereich von bis zu 60° verschwenkbar gehalten ist.

Eine besonders vorteilhafte Ausgewogenheit zwischen Stabilität und Montierbarkeit lässt sich gemäß einer weiteren Ausgestaltung dadurch gewährleisten, dass der Spannbolzen an seiner ersten Endseite, insbesondere ausgehend von einer im Wesentlichen horizontalen Lage, insbesondere im Montagezustand, zwischen einem Winkel von +30° und -30° verschwenkbar ist. Folglich ist der Spannbolzen im Montagezustand des Lastträgersystems um etwa 30° nach oben verschwenkbar und um etwa 30° nach unten verschwenkbar. Der gesamte überstreichbare Winkel beträgt dann folglich 60°. Wie vorstehend beschrieben, ist vorgesehen, dass sich beide Winkel jeweils nur dann erreichen lassen, wenn die erste Endseite beispielsweise für einen ersten Winkel von +30° in eine untere Position verschoben ist und für einen zweiten Winkel von -30° in eine obere Position verschoben ist. Die horizontale Referenzposition verschiebt sich also mit der ersten Endseite, insbesondere deren Lagerstelle.

Besonders bevorzugt ist vorgesehen, dass der Spannbolzen zwischen einem Winkel von +25° und -15° verschwenkbar ist. Es ist auch vorgesehen, dass der Spannbolzen insbesondere zwischen einem Winkel von +19,5° und -7° verschwenkbar ist. Der Spannbolzen ist folglich um etwa 19,5° nach oben verschwenkbar und um etwa 7° nach unten verschwenkbar. Dabei bezieht sich die Winkelangabe stets auf die Lagerstelle des Spannbolzens im Grundkörper, der - wie vorstehend beschrieben - verschiebbar, insbesondere translatorisch verschiebbar, gehalten ist.

Gemäß einer weiteren Ausgestaltung des Lastträgersystems ist vorgesehen, dass der Spannbolzen an seiner ersten Endseite in einem Quergewindebolzen gelagert ist. Der Quergewindebolzen ist vorzugsweise als zylindrischer Bolzen ausgebildet, der in seiner Quererstreckung mindestens eine Ausnehmung mit einem Innengewinde aufweist. Auf diese Weise ist der Spannbolzen vorzugsweise in den Quergewindebolzen einschraubbar, so dass der Spannbolzen nachfolgend um die Längsachse des Quergewindebolzens verschwenkbar ist. Vorzugsweise ist der Quergewindebolzen in einem Befestigungshohlraum des Grundkörpers translatorisch, insbesondere in einer Höhenrichtung, bewegbar gehalten. Auf diese Weise wird gleichzeitig eine Verschiebbarkeit als auch eine Verschwenkbarkeit des Spannbolzens realisiert. Der Befestigungshohlraum begrenzt mit seiner Form die Verschiebbarkeit des Quergewindebolzens. Die zweite Endseite mit dem Spannwinkel ist folglich, im Rahmen der durch die Befestigung gegebenen Grenzen sowie durch den Grundkörper beschränkt, frei bewegbar.

Eine weitere Ausgestaltung des Lastträgersystems sieht vor, dass der Spannbolzen mindestens eine Spannschraube, insbesondere mit einem Außengewinde, und mindestens eine Spannhülse, insbesondere mit einem korrespondierenden Innengewinde, aufweist. Vorzugsweise weist die Spannhülse an einer ersten Endseite ein Außengewinde auf, mit dem die Spannhülse in den Quergewindebolzen einschraubbar ist. Die Spannhülse ist am Quergewindebolzen befestigt. Die Spannschraube durchtritt vorzugsweise den Spannwinkel und ist mit ihrem Außengewinde mit dem Innengewinde der Spannhülse verschraubt. Auf diese Weise kann mittels Schraube die Länge des Spannbolzens und damit die Spannkraft eingestellt werden.

Gemäß einer weiteren Ausgestaltung des Lastträgersystems ist vorgesehen, dass der Spannbolzen mindestens eine Führungshülse aufweist, und dass die Führungshülse die Spannschraube, insbesondere im Bereich des Außengewindes, und/oder die Spannhülse zumindest teilweise umgibt. Vorzugsweise umgibt die Führungshülse sowohl die Spannschraube als auch die Spannhülse zumindest teilweise. Vorzugsweise liegt die Führungshülse auf dem Außenumfang der Spannhülse an. Der Grad der Überdeckung wird insbesondere durch den Grad des Einschraubens der Spannschraube in die Spannhülse bestimmt. Durch die Führungshülse wird vorteilhaft das Eindringen von Schmutz in den Spannbolzen verhindert.

Zum Zusammenwirken mit dem Spannwinkel hat es sich als vorteilhaft herausgestellt, wenn vorgesehen ist, dass die Führungshülse mindestens einen Anschlagkragen aufweist, und dass die Führungshülse mit dem Anschlagkragen in einer Ausnehmung an dem Spannwinkel anliegt. Der Spannwinkel weist vorzugsweise mindestens eine Ausnehmung auf, die von dem Spannbolzen, insbesondere von der Führungshülse und der Spannschraube, durchtreten wird.

Vorteilhaft ist der Spannwinkel auf dem Spannbolzen zwischen dem Anschlagkragen der Führungshülse und einem ringförmigen Befestigungselement angeordnet. Beispielsweise ist das Befestigungselement auf die Führungshülse aufgepresst. Die Spannschraube ist in die Führungshülse eingeführt und in das Innengewinde der Spannhülse eingeschraubt. Vorteilhaft ist vorgesehen, dass zwischen einem Kopf der Spannschraube und der Führungshülse, insbesondere dem Anschlagkragen der Führungshülse, mindestens eine Unterlegscheibe angeordnet ist.

Das Lastträgersystem gemäß der vorliegenden Erfindung wird vorzugsweise dadurch weitergebildet, dass mindestens zwei Querträger vorhanden sind. An jeder Endseite eines Querträgers ist vorzugsweise jeweils ein Klemmfuß angeordnet. Die Klemmfüße eines Querträgers sind zur Einstellung einer Klemmbreite auf einem Fahrzeugdach in dem Querträger verschiebbar und stufenlos fixierbar. Der Grundkörper eines Klemmfußes ist dazu vorzugsweise zumindest teilweise in den Innenumfang eines Querträgers an einer Endseite eingeschoben. Der Querträger weist an einer Endseite vorzugsweise mindestens eine Einstellschraube auf, die in einer Führungsnut mit einem gegenüberliegenden Klemmstein in dem Grundkörper geführt ist. Der Grundkörper weist eine korrespondierende Führungsnut auf, so dass die Eindringtiefe des Klemmfußes, insbesondere des Grundkörpers des Klemmfußes, in den Querträger stufenlos einstellbar und an der eingestellten Position fixierbar ist.

Jeder Querträger ist bevorzugt zumindest teilweise gekrümmt, insbesondere mit einem Radius gekrümmt, ausgebildet. Beispielsweise ist vorgesehen, dass ausgehend von jeder Endseite des Querträgers der Querträger vollständig gerade ausgebildet ist, wobei das mittlere Drittel jedes Querträgers eine Krümmung aufweist. Der Querträger ist vorzugsweise derart gekrümmt, dass er sich im Montagezustand konvex vom Fahrzeugdach weg erstreckt.

Bevorzugt zur Befestigung einer Bodenplatte an dem Lastträgersystem hat sich gemäß einer weiteren Ausgestaltung als vorteilhaft herausgestellt, wenn vorgesehen ist, dass mindestens acht Klemmfüße vorhanden sind. Vier der acht Klemmfüße sind mit jeweils zwei Querträgern verbindbar. Weitere vier der acht Klemmfüße sind mit einem Stützträger verbindbar. Vorzugsweise sind vier Stützträger und zwei Querträger vorgesehen. Die Klemmfüße sind insbesondere identisch ausgebildet.

Vorzugsweise sind mindestens zwei, insbesondere genau zwei, Querträger vorhanden, so dass an jedem Endbereich eines Querträgers mindestens ein Klemmfuß angeordnet ist. Die Stützträger sind ähnlich einem Querträger ausgebildet. Jeder Stützträger weist eine Länge auf, die einer Teillänge eines Querträgers entspricht. Vorzugsweise hat ein Stützträger eine Länge, die etwa einem Drittel der Länge eines Querträgers entspricht. Der Querschnitt des Stützträgers stimmt beispielsweise mit dem Querschnitt des Querträgers überein. Jeder Klemmfuß ist, insbesondere mit seinem Grundkörper, zumindest teilweise in einen Stützträger einschiebbar und zur Einstellung einer Klemmbreite in dem Stützträger verschiebbar und stufenlos fixierbar gehalten. Der diesbezügliche Mechanismus ist wie vorstehend für die Querträger beschrieben ausgebildet.

Bevorzugt bei Systemen, bei denen eine Bodenplatte auf den Querträgern befestigt wird, hat sich gemäß einer weiteren Ausgestaltung als vorteilhaft herausgestellt, wenn vorgesehen ist, dass mindestens zwei, insbesondere vier, Schwingungsdämpfungsmittel umfasst sind. Die Schwingungsdämpfungsmittel sind an den Querträgern und/oder an den Stützträgern derart befestigt, dass sie sich in einer Ebene unterhalb der Bodenplatte erstrecken und von unten an der Bodenplatte anliegen. Die Schwingungsdämpfungsmittel sind beispielsweise in Form von Schwingungsdämpfungswinkeln ausgebildet, die beispielsweise einen Winkel von etwa 90° überstreichen, so dass sie sich im Montagezustand im Wesentlichen senkrecht in einer Ebene von dem Querträger und/oder von dem Stützträger weg erstrecken. Vorzugsweise ist vorgesehen, dass an jedem der vier Stützträger mindestens ein Schwingungsdämpfungsmittel, insbesondere in Form eines Schwingungsdämpfungswinkels, befestigt ist. Vorzugsweise sind die Querträger in der Mitte angeordnet, während die Stützträger jeweils vorne und hinten montiert sind. Auf diese Weise lässt sich im Montagezustand, vorzugsweise im Montagezustand einer Bodenplatte, eine Vibration der Bodenplatte während der Fahrt, insbesondere durch Einflüsse durch den Fahrtwind, vorteilhaft verhindern.

Gemäß einer Ausgestaltung des Lastträgersystems ist vorgesehen, dass der Grundkörper mindestens eine im Wesentlichen U-förmige Ausnehmung aufweist, und dass der Spannbolzen in der U-förmigen Ausnehmung angeordnet ist. Der Spannbolzen erstreckt sich vorzugsweise im Wesentlichen parallel zu den beiden - gedachten - U-Schenkeln der U-förmigen Ausnehmung. Ferner ist insbesondere vorgesehen, dass der Grundkörper, insbesondere im Bereich der U-förmigen Ausnehmung, mindestens eine Rampe aufweist. Die Rampe stellt eine Aussparung im Material des Grundkörpers dar und ermöglicht ein Verschwenken des Spannbolzens im Bereich der vorstehend beschriebenen Winkelbereiche.

Eine weitere Ausgestaltung des Lastträgersystems sieht vor, dass am Spannbolzen ein Gegenhalter angeordnet ist. Der Gegenhalter ist in Längsrichtung des Spannbolzens am Spannbolzen beabstandet zum Spannwinkel angeordnet. Der Gegenhalter erstreckt sich zunächst vorzugsweise im Wesentlichen orthogonal zur Längsrichtung des Spannbolzens von diesem weg und weist in seinem von dem Spannbolzen weggewandten Endbereich einen Winkel auf. Der Winkel erstreckt sich bevorzugt in Richtung des Spannwinkels und wirkt mit diesem zusammen. Der Gegenhalter kontaktiert den Spannwinkel folglich beabstandet vom Spannbolzen, insbesondere in radialer Richtung beabstandet. Vorzugsweise ist der Gegenhalter an der Führungshülse des Spannbolzens angeordnet. Beispielsweise ist der Gegenhalter form-, kraft-, und/oder stoffschlüssig mit dem Spannbolzen, insbesondere der Führungshülse, verbunden.

Der Spannwinkel weist vorteilhaft einen Wirkbereich auf, in dem er im Montagezustand mit einer Reling eines Fahrzeugs zusammenwirken kann. Der Wirkbereich ist insbesondere auf einer ersten Seite des Spannbolzens bzw. einer Längsachse des Spannbolzens angeordnet. Vorteilhaft wirkt der Gegenhalter auf einer in Bezug auf den Spannbolzen bzw. der Längsachse des Spannbolzens gegenüberliegenden, zweiten Seite mit dem Spannwinkel zusammen, so dass sich der Spannwinkel bei Krafteinwirkung durch eine Reling an dem Gegenhalter abstützen kann. Der Spannwinkel stützt sich, insbesondere im Montagezustand, an dem Gegenhalter ab, so dass eine größere Kraftübertragung mit dem Spannwinkel erfolgen kann.

Eine weitere vorteilhafte Ausgestaltung sieht vor, dass der Gegenhalter drehfest am Spannbolzen befestigt ist. Beispielsweise ist der Gegenhalter kraft-, form- und/oder stoffschlüssig drehfest mit dem Spannbolzen, insbesondere der Führungshülse des Spannbolzens, verbunden. Vorteilhaft ist vorgesehen, dass der Gegenhalter drehfest mit dem Spannwinkel, vorzugsweise formschlüssig, zusammenwirkt. Der Gegenhalter weist in einem von dem Spannbolzen abgewandten Endbereich vorzugsweise einen Winkel auf. Beispielsweise weist der Winkel mindestens eine Ausnehmung auf, die mit einem Vorsprung des Spannwinkels zusammenwirkt.

Vorzugsweise ist vorgesehen, dass die Ausnehmung etwas breiter als der Vorsprung ist, so dass der Spannkeil in den Grenzen der Ausnehmung rotierbar ist. Der Gegenhalter dient insbesondere als Montagehilfe und gewährleistet einen Verdrehschutz für den Spannkeil.

Die Erfindung betrifft ferner einen Klemmfuß, insbesondere für ein Lastträgersystem nach einem der vorstehend beschriebenen Ausführungsbeispiele, vorteilhaft ausgebildet nach einem der vorstehend beschriebenen Ausführungsbeispiele.

Weitere vorteilhafte Ausgestaltungen der Erfindung ergeben sich aus der folgenden Figurenbeschreibung und den abhängigen Unteransprüchen.

Es zeigen:
- Fig. 1: eine perspektivische Ansicht eines Ausführungsbeispiels eines Lastträgersystems,
- Fig. 2: eine perspektivische Ansicht eines Ausführungsbeispiels eines Klemmfußes mit Spannbolzen,
- Fig. 3: eine perspektivische Ansicht eines Ausführungsbeispiels eines Klemmfußes,
- Fig. 4: eine Schnittansicht durch ein Ausführungsbeispiel eines Klemmfußes,
- Fig. 5: ein Ausführungsbeispiel eines Lastträgersystems mit teilweise montierter Bodenplatte,
- Fig. 6: ein Ausführungsbeispiel eines Lastträgersystems mit vollständig montierter Bodenplatte,
- Fig. 7: eine Schnittansicht durch ein Ausführungsbeispiel eines Klemmfußes in einer ersten Ausrichtung des Spannbolzens,
- Fig. 8: eine Schnittansicht durch das Ausführungsbeispiel eines Klemmfußes gemäß Fig. 7 in einer zweiten Ausrichtung des Spannbolzens,
- Fig. 9: eine Schnittansicht durch ein Ausführungsbeispiel eines Klemmfußes, und
- Fig. 10: eine perspektivische Ansicht des Ausführungsbeispiels eines Klemmfußes der Fig. 9.

In den verschiedenen Figuren der Zeichnung sind gleiche Teile stets mit denselben Bezugszeichen versehen.

Der Schutzbereich der Erfindung wird durch die Patentansprüche bestimmt. Die Beschreibung und die Zeichnungen sind jedoch zur Auslegung der Patentansprüche heranzuziehen.

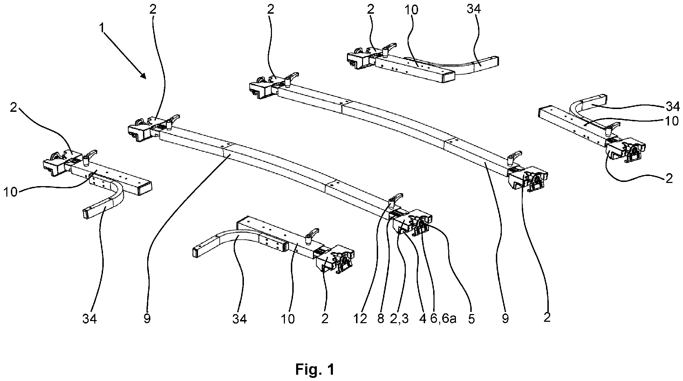

Fig. 1 zeigt ein Ausführungsbeispiel eines Lastträgersystems 1 für ein - nicht dargestelltes - Fahrzeug in perspektivischer Ansicht. Das Lastträgersystem 1 weist eine Mehrzahl - hier acht - von Klemmfüßen 2 zur Befestigung im Dachbereich des Fahrzeugs auf. Jeder Klemmfuß 2 verfügt über einen Grundkörper 3 sowie über einen Anlagebereich 4 zur Anlage an einer - nicht dargestellten - Dachreling eines Fahrzeugs. An jedem Grundkörper 2 ist mindestens ein Spannbolzen 5 mit einem Spannwinkel 6 angeordnet. Im Montagezustand ist eine Dachreling zwischen dem Spannwinkel 6 und dem Anlagebereich 4 verspannbar, wodurch das Lastträgersystem 1 am Fahrzeug befestigt wird.

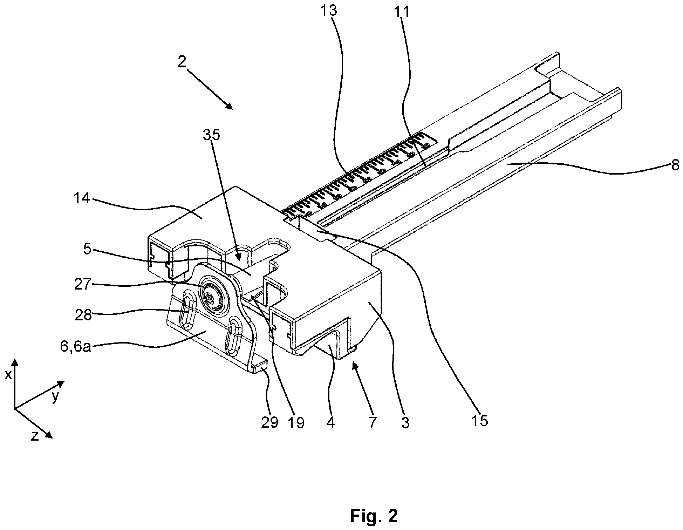

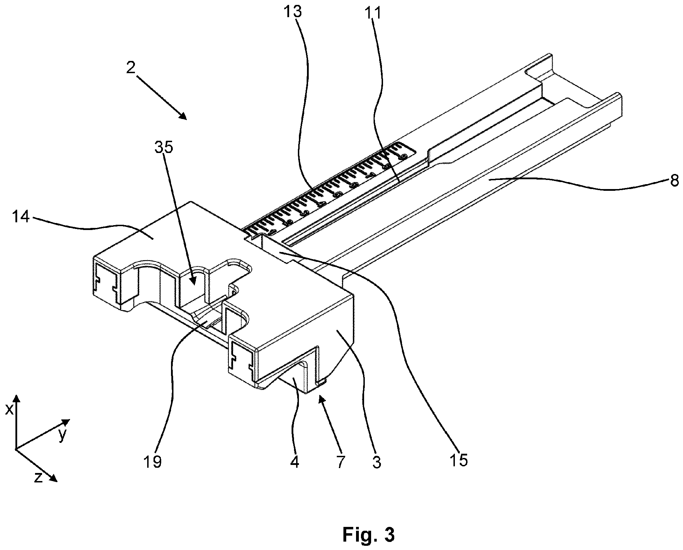

Die Klemmfüße 2 des Ausführungsbeispiels der Fig. 1 sind in den Fig. 2, 3 und 4 in verschiedenen Ansichten separat dargestellt. Fig. 2 zeigt einen Klemmfuß 2 mit Spannbolzen 5 und Spannwinkel 6, Fig. 3 zeigt den Klemmfuß 2 ohne den Spannbolzen 5 und den Spannwinkel 6. Gemäß Fig. 2 und 3 weist der Klemmfuß 2 einen Anlagebereich 4 zur Anlage an einer Dachreling eines Fahrzeugs auf. Der Anlagebereich 4 ist an einer ersten Endseite 7 des Grundkörpers 3 ausgebildet.

Angrenzend an die erste Endseite 7 weist der Grundkörper 3 einen Verbindungsbereich 8 auf, der eine Außenkontur aufweist, die es erlaubt, dass der Grundkörper 3 in einen beispielsweise in Fig. 1 dargestellten Querträger 9 oder Stützträger 10 einbringbar ist. Der Verbindungsbereich 8 weist eine längs verlaufende und mittig angeordnete Führungsnut 11 auf, die mit einem Klemmstein - nicht dargestellt - einer Befestigungsschraube 12 derart zusammenwirkt, dass der Grundkörper 3 in seiner Position relativ zum Querträger 9 oder zum Stützträger 10 fixiert werden kann, wodurch das Lastträgersystem 1 auf eine Fahrzeugbreite bzw. einen Relingabstand eines Fahrzeugs einstellbar ist. Um einem Benutzer das Einstellen an die Fahrzeugbreite zu erleichtern, ist ferner eine Skala 13 an dem Grundkörper 3, insbesondere an dem Verbindungsbereich 8, ausgebildet.

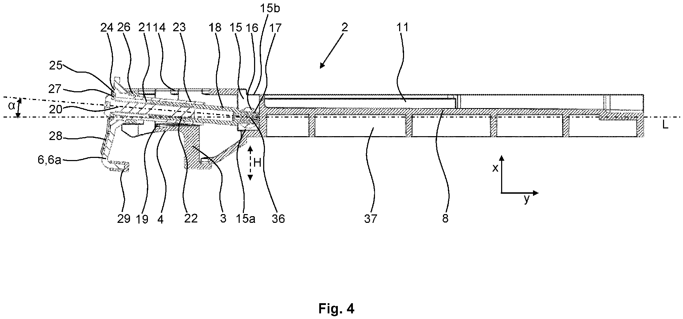

Fig. 4 zeigt ein Ausführungsbeispiel eines Klemmfußes 2 im Längsschnitt. Der Grundkörper 3 ist im Wesentlichen einstückig als Spritzgussteil ausgebildet und ist an der ersten Endseite 7 mit einem Deckel 14 abgedeckt. Zwischen der ersten Endseite 7 und dem Verbindungsbereich 8 ist ein Führungshohlraum 15 ausgebildet. In dem Führungshohlraum 15 ist ein Quergewindebolzen 16 angeordnet, in den der Spannbolzen 5 mit dem Außengewinde 17 einer Spannhülse 18 eingeschraubt ist.

Der Quergewindebolzen 16 ist in dem Führungshohlraum 15 derart geführt, dass er in einer Höhenrichtung H - entlang des Doppelpfeils gemäß Fig. 4 und parallel zur x-Richtung - zwischen einer ersten Endlage 15a und einer zweiten Endlage 15b verschiebbar ist. Vorzugsweise ist der Quergewindebolzen in z-Richtung und y-Richtung, insbesondere abgesehen von einem erforderlichen Spiel, unbeweglich gehalten. Der Quergewindebolzen 16 ist etwa über die Hälfte der Höhe des Grundkörpers 3 verschiebbar. Dadurch, dass der Quergewindebolzen 16 in Höhenrichtung translatorisch in dem Klemmfuß 2 bzw. in dem Grundkörper 3 bewegbar ist, ist der Spannbolzen 5, ausgehend von einer hier im Wesentlichen mit der Längsachse L zusammenfallenden Horizontalen, in einem Winkelbereich von +26° und -18° bewegbar. Die Horizontale zur Ermittlung des jeweiligen Winkels verschiebt sich mit der Lagerstelle der ersten Endseite des Spannbolzens 5, hier des Quergewindebolzens 16.

Fig. 4 zeigt den Spannbolzen 5 in einem Winkel α von etwa +8°. Um die Verschwenkbarkeit des Spannbolzens 5 in dem vorgenannten Winkelbereich von etwa 44° zu ermöglichen, weist der Grundkörper 3 eine Rampe 19 auf, die den Bewegungsraum beim Verschwenken des Spannbolzens 5 erweitert.

Auf diese Weise kann der Spannwinkel 6 eine Vielzahl von Ausrichtungen einnehmen, um eine Dachreling gemeinsam mit dem Anlagebereich 4 einzuspannen. Der Spannbolzen 5 weist bei diesem Ausführungsbeispiel ferner eine Spannschraube 20 auf, die mit ihrem Außengewinde 21 in ein korrespondierendes Innengewinde 22 einer Spannhülse 18 eingeschraubt ist. Sowohl die Spannschraube 20 als auch die Spannhülse 18 sind von einer Führungshülse 23 umgeben. Die Führungshülse 23 weist einen Anschlagkragen 24 auf, mit dem die Führungshülse 23 in einer Ausnehmung 25 in dem Spannwinkel 6 anliegt. Der Spannwinkel 6 ist gegenüber der Führungshülse 23 mit einem Befestigungselement 26 fixiert. Das Befestigungselement 26 ist aufgepresst.

Zwischen einem Kopf der Spannschraube 20 und dem Anschlagkragen 24 ist eine Unterlegscheibe 27 angeordnet. Mittels der Spannschraube 20 ist die Länge des Spannbolzens 5 einstellbar, indem sie in die Spannhülse 18 eingeschraubt wird. Damit sich der Spannbolzen 5 beim Einstellen der Länge über die Spannschraube 20 nicht aus dem Quergewindebolzen 16 löst, ist eine Konterschraube 36 an der ersten Endseite des Spannbolzens 5 stirnseitig in die Spannhülse 18 eingeschraubt. Durch den flachbauenden Grundkörper 3 und die Verschiebbarkeit des Spannbolzens 5 an seiner ersten Endseite weist das vorliegende Lastträgersystem 1 gegenüber aus dem Stand der Technik bekannten Lastträgersystemen eine geringe Bauhöhe auf.

Zur Stabilisierung des Spannwinkels 6 weist dieser stabilisierende Verformungen 28 auf. Um eine Dachreling nicht zu beschädigen, ist am Spannwinkel 6 ein Schutzgummi 29 angeordnet. Der Verbindungsbereich 8 des Grundkörpers 3 weist eine Führungsnut 11 auf. Unterhalb der Führungsnut 11 ist der Verbindungsbereich 8 mit Hohlräumen 37 ausgebildet, um das Gewicht des Grundkörpers 3 zu reduzieren.

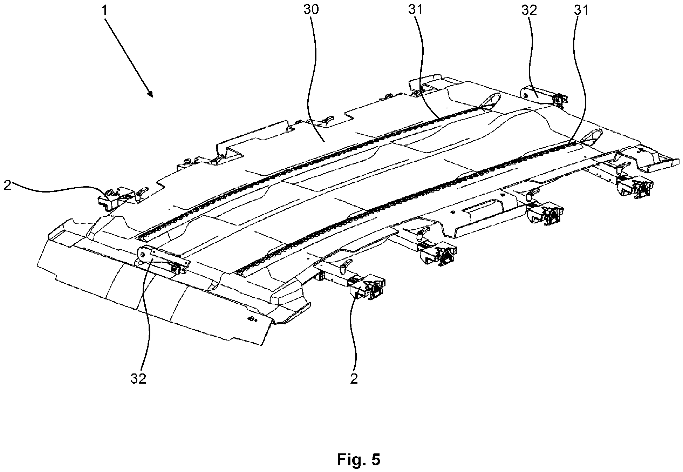

Fig. 5 zeigt das Ausführungsbeispiel eines Lastträgersystems 1 gemäß Fig. 1 mit teilweise montierter Bodenplatte 30. Die Bodenplatte 30 weist zwei Montageschienen 31 zur Befestigung von Last, beispielsweise Gepäck, auf. Die Bodenplatte 30 ist mit den Querträgern 9 und den Stützträgern 10 verbunden, beispielsweise verschraubt oder vernietet. Die Bodenplatte 30 weist zudem zwei Scharniere 32 zum Zusammenwirken mit einem Deckel für eine Dachbox auf.

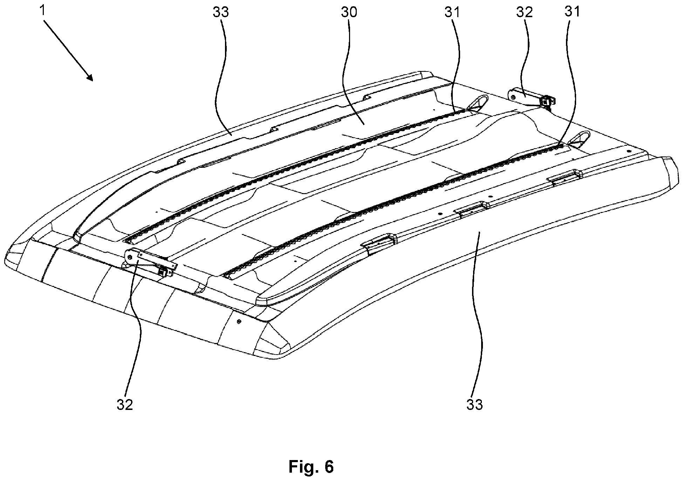

Fig. 6 zeigt eine vollständig montierte Bodenplatte 30 auf einem Lastträgersystem 1, bei dem die Bodenplatte 30 mit Seitenteilelementen 33 vervollständigt ist, um eine - nicht dargestellte - Dachreling vollständig abzudecken und damit die Aerodynamik des Lastträgersystems 1 zu verbessern. Die Bodenplatte 30 ist vorzugsweise derart gestaltet, dass sie im Montagezustand nur im Bereich der Frontscheibe des Fahrzeugs anliegt. Dadurch wird eine Beschädigung von Lackflächen verhindert. Vorzugsweise ist zwischen Bodenplatte und Frontscheibe ein Dämpfungsmittel, beispielsweise ein Gummi, angeordnet.

Gemäß Fig. 1 ist an den Stützträgern 10 jeweils ein Schwingungsdämpfungsmittel 34 in Form eines Schwingungsdämpfungswinkels vorgesehen, das bei montierter Bodenplatte 30 jeweils die Schwingung der Bodenplatte 30 im vorderen und hinteren Bereich des Lastträgersystems 1 reduziert. Die Schwingungsdämpfungsmittel 34 sind gemäß Fig. 1 derart an den Stützträgern 10 befestigt, dass sie sich im Montagezustand in Richtung der Fahrzeugfront und des Fahrzeughecks erstrecken.

Gemäß Fig. 2 und 3 weist der Grundkörper 3 eine U-förmige Ausnehmung 35 auf, in der sich der Spannbolzen 5 erstreckt. Im unteren Bereich der U-förmigen Ausnehmung ist eine Rampe 19 ausgebildet, die den Schwenkbereich des Spannbolzens 5 erweitert.

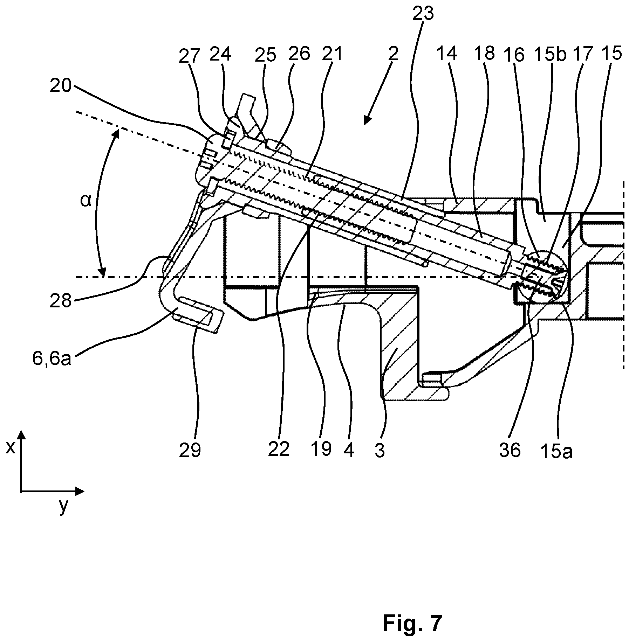

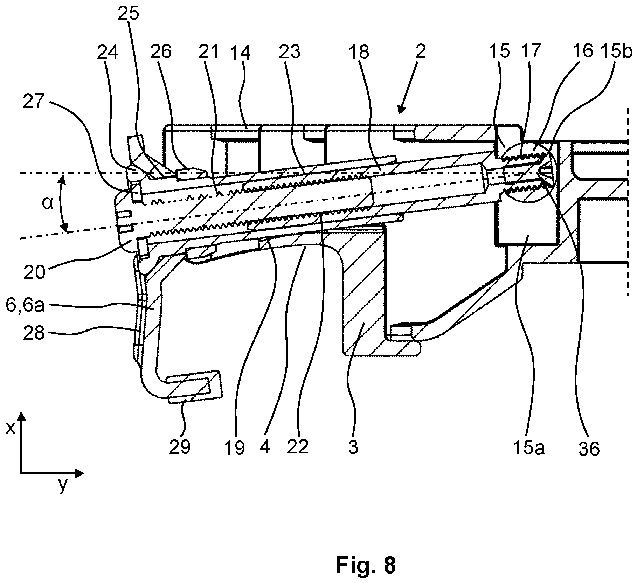

Fig. 7 und 8 zeigen eine Schnittansicht durch ein Ausführungsbeispiel eines Klemmfußes 2. Fig. 7 zeigt den Spannbolzen 5 in einer ersten Winkelposition, während der Quergewindebolzen 16 in der ersten Endlage 15a angeordnet ist; Fig. 8 den Spannbolzen 5 in einer zweiten Winkelposition, während der Quergewindebolzen 16 in der zweiten Endlage 15b angeordnet ist. Der Winkelbereich, den der Spannbolzen 5 überstreichen kann - bei verschiedenen Positionen des Quergewindebolzens 16 in dem Führungshohlraum 15 - beträgt etwa 26,5°. Bei der Betrachtung des Winkelbereichs werden folglich die Winkel α in der ersten Endlage 15a nach oben und in der zweiten Endlage 15b nach unten als Betrag miteinander addiert.

Fig. 7 zeigt den Spannbolzen 5 in einem Winkel α von etwa +19,5°. Fig. 8 zeigt den Spannbolzen 5 in einem Winkel α von etwa -7°. Die Position des Quergewindebolzens 16 ist jeweils unterschiedlich. Der Winkel α wird stets im ausgehend von einer im Wesentlichen Horizontalen gemessen. Die Horizontale ist stets zumindest parallel zur Längsachse L - siehe Fig. 4 - bzw. zur y-Richtung.

Durch die Verschiebbarkeit des Quergewindebolzens 16 innerhalb des Führungshohlraums 15 kann der Spannbolzen 5 - bei gleichzeitig flachbauender Bauform des Klemmfußes - eine Vielzahl von Ausrichtungen einnehmen, um eine Dachreling gemeinsam mit dem Anlagebereich 4 einzuspannen und das Lastträgersystem 1 zu montieren. Der Spannbolzen 5 weist eine Spannschraube 20 auf, die mit ihrem Außengewinde 21 in ein korrespondierendes Innengewinde 22 einer Spannhülse 18 eingeschraubt ist. Sowohl die Spannschraube 20 als auch die Spannhülse 18 sind von einer Führungshülse 23 umgeben. Die Führungshülse 23 weist einen Anschlagkragen 24 auf, mit dem die Führungshülse 23 in einer Ausnehmung 25 in dem Spannwinkel 6 anliegt. Der Spannwinkel 6 ist gegenüber der Führungshülse 23 mit einem Befestigungselement 26 fixiert. Das Befestigungselement 26 ist aufgepresst.

Zwischen einem Kopf der Spannschraube 20 und dem Anschlagkragen 24 ist eine Unterlegscheibe 27 angeordnet. Mittels der Spannschraube 20 ist die Länge des Spannbolzens 5 einstellbar, indem sie in die Spannhülse 18 eingeschraubt wird. Damit sich der Spannbolzen 5 beim Einstellen der Länge über die Spannschraube 20 nicht aus dem Quergewindebolzen 16 löst, ist eine Konterschraube 36 an der ersten Endseite des Spannbolzens 5 stirnseitig in die Spannhülse 18 eingeschraubt.

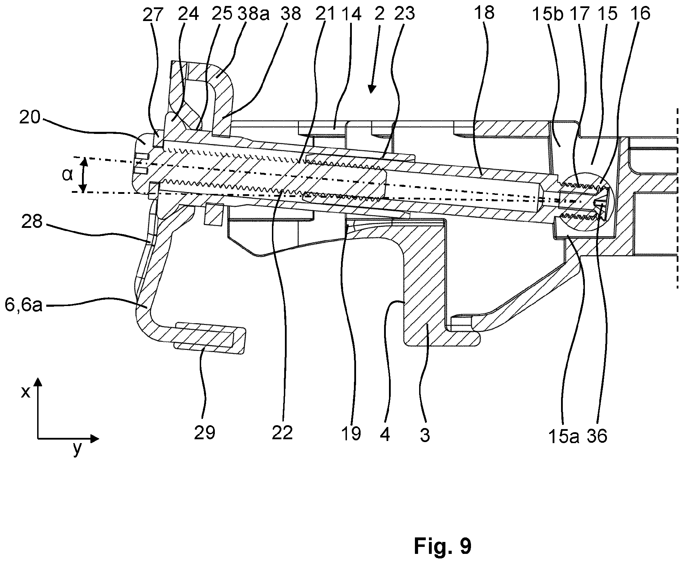

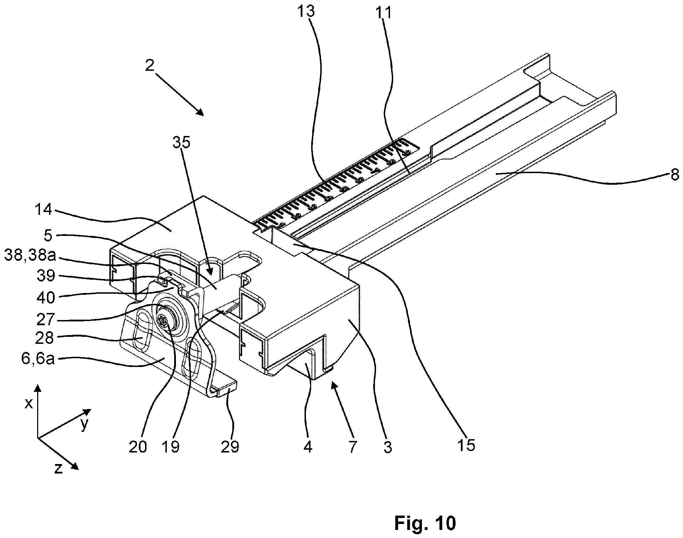

Fig. 9 und Fig. 10 zeigen ein Ausführungsbeispiel eines Klemmfußes 2, Fig. 9 in Schnittansicht, Fig. 10 in perspektivischer Ansicht. Bei diesem Ausführungsbeispiel ist an dem Spannbolzen 5, entlang der Längsachse des Spannbolzens 5 zu dem Spannwinkel 6 beabstandet, ein Gegenhalter 38 angeordnet. Der Gegenhalter 38 ist drehfest mit dem Spannbolzen 5, insbesondere mit der Führungshülse 23, verbunden. Der Spannwinkel 6 weist einen Wirkbereich 6a auf, der im Montagezustand mit einer Reling zusammenwirkt. In dem Wirkbereich 6a ist vorzugsweise auch das Schutzgummi 29 angeordnet. Der Wirkbereich 6a erstreckt sich auf einer ersten Seite - gemäß Fig. 9 und 10 unterhalb - des Spannbolzens 5.

Der Gegenhalter 38 erstreckt sich ausgehend von dem Spannbolzen 5 von dem Spannbolzen 5 weg, nämlich in eine in Bezug auf den Spannbolzen 5 bzw. dessen Längsachse der ersten Seite gegenüberliegende zweite Seite. In einem von dem Spannbolzen 5 weggewandten Endbereich weist der Gegenhalter 38 einen Winkel 38a auf. Der Winkel 38a wirkt mit dem Spannwinkel 6 zusammen, indem der Spannwinkel 6 und der Gegenhalter 38 aneinander anliegen. Auf diese Weise kann sich der Spannwinkel 6 bei einer Krafteinwirkung von einer Reling im Wirkbereich 6a auf der gegenüberliegenden, zweiten Seite an dem Gegenhalter 38 abstützen, wodurch die Stabilität im Montagezustand gesteigert wird.

Der Gegenhalter 38 weist an seinem Winkel 38a eine Ausnehmung 39 auf, die mit einem Vorsprung 40 an dem Spannwinkel 6 zusammenwirkt, indem der Vorsprung 40 in der Ausnehmung 39 angeordnet ist. Durch das Zusammenwirken zwischen Ausnehmung 39 und Vorsprung 40 wird neben einer Montagehilfe auch ein Verdrehschutz für den Spannwinkel 6 bereitgestellt. Der Gegenhalter 38 ist drehfest an dem Spannbolzen 5 befestigt. Die Ausnehmung 39 ist bei diesem Ausführungsbeispiel geringfügig breiter als der Vorsprung, so dass eine gewisse rotative Ausrichtung des Spannwinkels 6 bei der Montage ermöglicht ist.

Der Schutzbereich der Erfindung wird durch die Patentansprüche bestimmt. Die Beschreibung und die Zeichnungen sind jedoch zur Auslegung der Patentansprüche heranzuziehen.

### Bezugszeichen

- 1: Lastträgersystem
- 2: Klemmfuß
- 3: Grundkörper
- 4: Anlagebereich
- 5: Spannbolzen
- 6: Spannwinkel
- 6a: Wirkbereich von 6
- 7: Erste Endseite
- 8: Verbindungsbereich
- 9: Querträger
- 10: Stützträger
- 11: Führungsnut
- 12: Befestigungsschraube
- 13: Skala
- 14: Deckel
- 15: Führungshohlraum
- 15a: Erste Endlage
- 15b: Zweite Endlage
- 16: Quergewindebolzen
- 17: Außengewinde
- 18: Spannhülse
- 19: Rampe
- 20: Spannschraube
- 21: Außengewinde
- 22: Innengewinde
- 23: Führungshülse
- 24: Anschlagkragen
- 25: Ausnehmung
- 26: Befestigungselement
- 27: Unterlegscheibe
- 28: Verformung
- 29: Schutzgummi
- 30: Bodenplatte
- 31: Montageschiene
- 32: Scharnier
- 33: Seitenteilelement
- 34: Schwingungsdämpfungswinkel
- 35: U-förmige Ausnehmung
- 36: Konterschraube
- 37: Hohlraum
- 38: Gegenhalter
- 38a: Winkel von 38
- 39: Ausnehmung
- 40: Vorsprung
- H: Höhenrichtung
- L: Längsachse

## Patentansprüche

1. Lastträgersystem (1) für ein Fahrzeug, mit einer Mehrzahl von Klemmfüßen (2) zur Befestigung am Fahrzeug, wobei jeder Klemmfuß (2) mindestens einen Grundkörper (3) sowie mindestens einen Anlagebereich (4) zur Anlage an einer Dachreling des Fahrzeugs aufweist, wobei an dem Grundkörper (3) mindestens ein Spannbolzen (5) angeordnet ist, **dadurch gekennzeichnet, dass**
der Spannbolzen (5) an einer ersten Endseite verschiebbar an dem Grundkörper (3) gehalten ist, dass durch ein Verschieben die Position der ersten Endseite, also der Lagerstelle der ersten Endseite, innerhalb des Grundkörpers verändert wird, und dass an einer zweiten Endseite des Spannbolzens (5) ein Spannwinkel (6) angeordnet ist, und dass zwischen dem Spannwinkel (5) und dem Anlagebereich (4) die Dachreling verspannbar ist.

2. Lastträgersystem (1) nach Anspruch 1,
**dadurch gekennzeichnet, dass**
der Spannbolzen (5) an seiner ersten Endseite translatorisch verschiebbar ist, insbesondere entlang mindestens einer Geraden translatorisch verschiebbar ist.

3. Lastträgersystem (1) nach Anspruch 1 oder 2,
**dadurch gekennzeichnet, dass**
der Spannbolzen (5) zumindest an seiner ersten Endseite translatorisch in mindestens eine erste Höhenrichtung und/oder in mindestens eine Seitenrichtung und/oder in mindestens eine Tiefenrichtung verschiebbar ist.

4. Lastträgersystem (1) nach einem der Ansprüche 1 bis 3,
**dadurch gekennzeichnet, dass**
der Spannbolzen (5) zumindest an seiner ersten Endseite verschwenkbar gehalten ist, insbesondere in mindestens einer Schwenkebene verschwenkbar gehalten ist.

5. Lastträgersystem (1) nach Anspruch 4,
**dadurch gekennzeichnet, dass**
der Spannbolzen (5) an seiner ersten Endseite in einem Winkelbereich von mindestens 20°, insbesondere mindestens 30°, bevorzugt mindestens 45°, besonders bevorzugt mindestens 60°, verschwenkbar gehalten ist oder dass der Spannbolzen (5) an seiner ersten Endseite in einem Winkelbereich von bis zu 60° verschwenkbar gehalten ist

6. Lastträgersystem (1) nach einem der Ansprüche 1 bis 5,
**dadurch gekennzeichnet, dass**
der Spannbolzen (5) an seiner ersten Endseite, ausgehend von einer Horizontalen zwischen einem Winkel von +30° und -30° verschwenkbar ist, vorzugsweise zwischen einem Winkel von +25° und --15°, insbesondere zwischen einem Winkel von +19,5° und -7°.

7. Lastträgersystem (1) nach einem der Ansprüche 1 bis 6,
**dadurch gekennzeichnet, dass**
der Spannbolzen (5) an seiner ersten Endseite in einem Quergewindebolzen (16) gelagert ist, insbesondere eingeschraubt ist, vorzugsweise dass der Quergewindebolzen (16) in mindestens einer Richtung translatorisch bewegbar gehalten ist.

8. Lastträgersystem (1) nach einem der Ansprüche 1 bis 7,
**dadurch gekennzeichnet, dass**
der Spannbolzen (5) mindestens eine Spannschraube (20), insbesondere mit einem Außengewinde (21), und mindestens eine Spannhülse (18), insbesondere mit mindestens einem korrespondierenden Innengewinde (22), aufweist, bevorzugt dass die Spannhülse (18) an dem Quergewindebolzen (16) befestigbar ist.

9. Lastträgersystem (1) nach Anspruch 8,
**dadurch gekennzeichnet, dass**
der Spannbolzen (5) mindestens eine Führungshülse (23) aufweist, und dass die Führungshülse (23) die Spannschraube (20) und/oder die Spannhülse (18) zumindest teilweise umgibt.

10. Lastträgersystem (1) nach Anspruch 9,
**dadurch gekennzeichnet, dass**
die Führungshülse (23) mindestens einen Anschlagkragen (24) aufweist, und dass die Führungshülse (23) mit dem Anschlagkragen (24) in einer Ausnehmung an dem Spannwinkel (6) anliegt.

11. Lastträgersystem (1) nach einem der Ansprüche 1 bis 10,
**dadurch gekennzeichnet, dass**
mindestens zwei, insbesondere zumindest teilweise gekrümmte, Querträger (9) vorhanden sind, dass an jeder Endseite eines Querträgers (9) ein Klemmfuß (2) angeordnet ist, und dass die Klemmfüße (2) zur Einstellung einer Klemmbreite in dem Querträger (9) verschiebbar und stufenlos fixierbar sind und/oder dass mindestens acht Klemmfüße (2) umfasst sind, dass vier der Klemmfüße (2) mit zwei Querträgern (9) verbindbar sind, und dass weitere vier Klemmfüße (2) jeweils mit einem Stützträger (10) verbindbar sind, insbesondere dass sich die Stützträger (10) jeweils nur über einen Teil der Länge eines Querträgers (9) erstrecken.

12. Lastträgersystem (1) nach einem der Ansprüche 1 bis 11,
**dadurch gekennzeichnet, dass**
mindestens zwei, insbesondere vier, Schwingungsdämpfungsmittel (34), vorzugsweise in Form von Schwingungsdämpfungswinkeln umfasst sind, insbesondere dass jeweils ein Schwingungsdämpfungsmittel (34) an einem Querträger (10) und/oder an einem Stützträger (10) befestigt ist und/oder dass der Grundkörper (3) mindestens eine im Wesentlichen U-förmige Ausnehmung (35) aufweist, und dass der Spannbolzen (5) in der U-förmigen Ausnehmung (35) angeordnet ist.

13. Lastträgersystem (1) nach einem der Ansprüche 1 bis 12,
**dadurch gekennzeichnet, dass**
am Spannbolzen (5) ein Gegenhalter (38) angeordnet ist, insbesondere dass der Gegenhalter (38) am Spannbolzen (5) beabstandet zum Spannwinkel (6) befestigt ist, vorzugsweise dass der Gegenhalter (38) den Spannwinkel (6) beabstandet vom Spannbolzen (5) kontaktiert, vorteilhaft dass der Gegenhalter (38) drehfest am Spannbolzen (5) befestigt ist, insbesondere dass der Gegenhalter (38) drehfest mit dem Spannwinkel (6), vorzugsweise formschlüssig, zusammenwirkt.

14. Klemmfuß (2), insbesondere für ein Lastträgersystem (1) nach einem der Ansprüche 1 bis 13, wobei der Klemmfuß (2) mindestens einen Grundkörper (3) aufweist, wobei der Klemmfuß (2) mindestens einen Anlagebereich (4) zur Anlage an einer Dachreling eines Fahrzeugs aufweist, und wobei an dem Grundkörper (3) mindestens ein Spannbolzen (5) angeordnet ist,
**dadurch gekennzeichnet, dass**
der Spannbolzen (5) an einer ersten Endseite verschiebbar an dem Grundkörper (3) gehalten ist, dass durch ein Verschieben die Position der ersten Endseite, also der Lagerstelle der ersten Endseite, innerhalb des Grundkörpers verändert wird, und dass an einer zweiten Endseite des Spannbolzens (5) ein Spannwinkel (6) angeordnet ist, und dass zwischen dem Spannwinkel (6) und dem Anlagebereich (4) eine Dachreling verspannbar ist.

15. Klemmfuß (2) nach Anspruch 14,
**gekennzeichnet durch**
den Merkmalsinhalt des Kennzeichnungsteils mindestens eines Anspruchs oder mehrerer Ansprüche der Ansprüche 2 bis 10 oder 12 oder 13.

## Claims

1. Load carrier system (1) for a vehicle, having a plurality of clamping feet (2) for fastening to the vehicle, wherein each clamping foot (2) has at least one base body (3) and at least one contact region (4) for contact with a roof railing of the vehicle, wherein at least one clamping bolt (5) is arranged on the base body (3),
**characterized in that**
the clamping bolt (5) is held displaceably on the base body (3) on a first end side, **in that** by displacement, the position of the first end side, i.e. the bearing point of the first end side, is changed within the base body, and **in that** a clamping angle (6) is arranged on a second end side of the clamping bolt (5), and **in that** the roof railing is bracable between the clamping angle (5) and the contact region (4).

2. Load carrier system (1) according to claim 1,
**characterized in that**
the clamping bolt (5) is translationally displaceable at its first end side, in particular is translationally displaceable along at least one straight line.

3. Load carrier system (1) according to claim 1 or 2,
**characterized in that**
the clamping bolt (5) is translationally displaceable at least on its first end side in at least one first height direction and/or in at least one lateral direction and/or in at least one depth direction.

4. Load carrier system (1) according to any one of claims 1 to 3,
**characterized in that**
the clamping bolt (5) is held pivotably at least on its first end side, in particular is held pivotably in at least one pivoting plane.

5. Load carrier system (1) according to claim 4,
**characterized in that**
the clamping bolt (5) is held pivotably at its first end side in an angular range of at least 20°, in particular at least 30°, preferably at least 45°, particularly preferably at least 60°, or **in that** the clamping bolt (5) is held pivotably at its first end side in an angular range of up to 60°

6. Load carrier system (1) according to any one of claims 1 to 5,
**characterized in that**
the clamping bolt (5) is pivotable at its first end side, starting from a horizontal, between an angle of +30° and -30°, preferably between an angle of +25° and -15°, in particular between an angle of +19.5° and -7°.

7. Load carrier system (1) according to any one of claims 1 to 6,
**characterized in that**
the clamping bolt (5) is mounted on its first end side in a transverse threaded bolt (16), in particular is screwed in, preferably **in that** the transverse threaded bolt (16) is held so as to be translationally movable in at least one direction.

8. Load carrier system (1) according to any one of claims 1 to 7,
**characterized in that**
the clamping bolt (5) has at least one clamping screw (20), in particular with an external thread (21), and at least one clamping sleeve (18), in particular with at least one corresponding internal thread (22), preferably **in that** the clamping sleeve (18) is fastenable to the transverse threaded bolt (16).

9. Load carrier system (1) according to claim 8,
**characterized in that**
the clamping bolt (5) has at least one guide sleeve (23), and **in that** the guide sleeve (23) at least partially surrounds the clamping screw (20) and/or the clamping sleeve (18).

10. Load carrier system (1) according to claim 9,
**characterized in that**
the guide sleeve (23) has at least one stop collar (24), and **in that** the guide sleeve (23) contacts with the stop collar (24) in a recess on the clamping angle (6).

11. Load carrier system (1) according to any one of claims 1 to 10, **characterized in that**
at least two, in particular at least partially curved, cross members (9) are present, **in that** a clamping foot (2) is arranged on each end side of a cross member (9), and **in that** the clamping feet (2) are displaceable and continuously fixable in the cross member (9) for setting a clamping width, and/or **in that** at least eight clamping feet (2) are included, **in that** four of the clamping feet (2) are connectable to two cross members (9), and **in that** a further four clamping feet (2) are connectable to a support member (10), in particular **in that** the support members (10) each extend only over part of the length of a cross member (9).

12. Load carrier system (1) according to any one of claims 1 to 11, **characterized in that**
at least two, in particular four, vibration damping means (34) are included, preferably in the form of vibration damping brackets, in particular **in that** in each case one vibration damping means (34) is fastened to a cross member (10) and/or to a support member (10) and/or **in that** the base body (3) has at least one substantially U-shaped recess (35), and **in that** the clamping bolt (5) is arranged in the U-shaped recess (35).

13. Load carrier system (1) according to any one of claims 1 to 12, **characterized in that**
a counterholder (38) is arranged on the clamping bolt (5), in particular **in that** the counterholder (38) is fastened to the clamping bolt (5) at a distance from the clamping angle (6), preferably **in that** the counterholder (38) contacts the clamping angle (6) at a distance from the clamping bolt (5), advantageously **in that** the counterholder (38) is fastened to the clamping bolt (5) in a rotationally fixed manner, in particular **in that** the counterholder (38) interacts with the clamping angle (6) in a rotationally fixed manner, preferably in a form-fitting manner.

14. Clamping foot (2), in particular for a load carrier system (1) according to any one of claims 1 to 13, wherein the clamping foot (2) has at least one base body (3), wherein the clamping foot (2) has at least one contact region (4) for contact with a roof rail of a vehicle, and wherein at least one clamping bolt (5) is arranged on the base body (3),
**characterized in that**
the clamping bolt (5) is held displaceably on the base body (3) on a first end side, **in that** by displacement, the position of the first end side, i.e. the bearing point of the first end side, is changed within the base body, and **in that** a clamping angle (6) is arranged on a second end side of the clamping bolt (5), and **in that** a roof railing is bracable between the clamping angle (6) and the contact region (4).

15. Clamping foot (2) according to claim 14,
**characterized by**
the feature's content of the characterizing part of at least one claim or several claims of claims 2 to 10 or 12 or 13.

## Revendications

1. Système de porte-charge (1) pour un véhicule, comprenant une pluralité de pieds de serrage (2) pour la fixation au véhicule, chaque pied de serrage (2) présentant au moins un corps de base (3) ainsi qu'au moins une zone d'appui (4) pour l'appui sur une galerie de toit du véhicule, au moins un boulon de serrage (5) étant disposé sur le corps de base (3),
**caractérisé en ce que**
le boulon de serrage (5) est maintenu sur un premier côté d'extrémité de manière déplaçable sur le corps de base (3), **en ce que**, par un déplacement, la position du premier côté d'extrémité, donc du point d'appui du premier côté d'extrémité, est modifiée à l'intérieur du corps de base, et **en ce qu'**une équerre de serrage (6) est disposée sur un deuxième côté d'extrémité du boulon de serrage (5), et **en ce que** la galerie de toit peut être serrée entre l'équerre de serrage (5) et la zone d'appui (4).

2. Système de support de charge (1) selon la revendication 1,
**caractérisé en ce que**
le boulon de serrage (5) peut être déplacé en translation sur son premier côté d'extrémité , en particulier peut être déplacé en translation le long d'au moins une ligne droite.

3. Système de porte-charge (1) selon la revendication 1 ou 2,
**caractérisé en ce que**
le boulon de serrage (5) peut être déplacé en translation au moins sur son premier côté d'extrémité dans au moins une première direction en hauteur et/ou dans au moins une direction latérale et/ou dans au moins une direction en profondeur.

4. Système de support de charge (1) selon l'une quelconque des revendications 1 à 3,
**caractérisé en ce que**
le boulon de serrage (5) est maintenu de manière pivotante au moins sur son premier côté d'extrémité, en particulier est maintenu de manière pivotante dans au moins un plan de pivotement.

5. Système de porte-charge (1) selon la revendication 4,
**caractérisé en ce que**
le boulon de serrage (5) est maintenu de manière pivotante sur son premier côté d'extrémité dans une plage angulaire d'au moins 20°, en particulier d'au moins 30°, de préférence d'au moins 45°, de manière particulièrement préférée d'au moins 60°, ou **en ce que** le boulon de serrage (5) est maintenu de manière pivotante sur son premier côté d'extrémité dans une plage angulaire allant jusqu'à 60°.

6. Système de support de charge (1) selon l'une quelconque des revendications 1 à 5,
**caractérisé en ce que**
le boulon de serrage (5) peut pivoter sur son premier côté d'extrémité, en partant d'une ligne horizontale, entre un angle de +30° et -30°, de préférence entre un angle de +25° et -15°, en particulier entre un angle de +19,5° et -7°.

7. Système de support de charge (1) selon l'une quelconque des revendications 1 à 6,
**caractérisé en ce que**
le boulon de serrage (5) est logé, en particulier vissé, sur son premier côté d'extrémité dans un boulon fileté transversal (16), de préférence **en ce que** le boulon fileté transversal (16) est maintenu mobile en translation dans au moins une direction.

8. Système de support de charge (1) selon l'une quelconque des revendications 1 à 7,
**caractérisé en ce que**
le boulon de serrage (5) présente au moins une vis de serrage (20), en particulier avec un filetage extérieur (21), et au moins une douille de serrage (18), en particulier avec au moins un filetage intérieur correspondant (22), de préférence que la douille de serrage (18) peut être fixée sur le boulon à filetage transversal (16).

9. Système de porte-charge (1) selon la revendication 8,
**caractérisé en ce que**
le boulon de serrage (5) présente au moins une douille de guidage (23), et **en ce que** la douille de guidage (23) entoure au moins partiellement la vis de serrage (20) et/ou la douille de serrage (18).

10. Système de porte-charge (1) selon la revendication 9,
**caractérisé en ce que**
lla douille de guidage (23) présente au moins une collerette de butée (24), et **en ce que** la douille de guidage (23) s'appuie avec la collerette de butée (24) dans un évidement sur l'équerre de serrage (6).

11. Système de support de charge (1) selon l'une quelconque des revendications 1 à 10,
**caractérisé en ce que**
au moins deux supports transversaux (9), en particulier au moins partiellement courbés, sont présents, **en ce qu'**un pied de serrage (2) est disposé sur chaque côté d'extrémité d'un support transversal (9), et **en ce que** les pieds de serrage (2) peuvent être déplacés et fixés en continu dans le support transversal (9) pour régler une largeur de serrage et/ou **en ce qu'**au moins huit pieds de serrage (2) sont compris, que quatre des pieds de serrage (2) peuvent être reliés à deux supports transversaux (9), et que quatre autres pieds de serrage (2) peuvent être reliés chacun à un support d'appui (10), en particulier que les supports d'appui (10) ne s'étendent chacun que sur une partie de la longueur d'un support transversal (9).

12. Système de support de charge (1) selon l'une quelconque des revendications 1 à 11,
**caractérisé en ce que**
au moins deux, en particulier quatre, moyens d'amortissement des vibrations (34) sont compris, de préférence sous la forme d'équerres d'amortissement des vibrations, en particulier **en ce que** respectivement un moyen d'amortissement des vibrations (34) est fixé à une traverse (10) et/ou à une poutre de support (10) et/ou **en ce que** le corps de base (3) présente au moins un évidement (35) essentiellement en forme de U, et **en ce que** le boulon de serrage (5) est disposé dans l'évidement en forme de U (35).

13. Système de support de charge (1) selon l'une quelconque des revendications 1 à 12,
**caractérisé en ce que**
un contre-support (38) est disposé sur le boulon de serrage (5), en particulier que le contre-support (38) est fixé sur le boulon de serrage (5) à distance de l'équerre de serrage (6), de préférence que le contre-support (38) entre en contact avec l'équerre de serrage (6) à distance du boulon de serrage (5), avantageusement que le contre-support (38) est fixé de manière solidaire en rotation sur le boulon de serrage (5), en particulier que le contre-support (38) interagit de manière solidaire en rotation avec l'équerre de serrage (6), de préférence par complémentarité de formes.

14. Pied de serrage (2), en particulier pour un système de porte-charge (1) selon l'une des revendications 1 à 13, le pied de serrage (2) présentant au moins un corps de base (3), le pied de serrage (2) présentant au moins une zone d'appui (4) pour l'appui sur une galerie de toit d'un véhicule, et au moins un boulon de serrage (5) étant disposé sur le corps de base (3),
**caractérisé en ce que**
le boulon de serrage (5) est maintenu sur un premier côté d'extrémité de manière déplaçable sur le corps de base (3), **en ce que** par déplacement la position du premier côté d'extrémité, donc du point d'appui du premier côté d'extrémité, est modifiée à l'intérieur du corps de base, et **en ce qu'**une équerre de serrage (6) est disposée sur un deuxième côté d'extrémité du boulon de serrage (5), et **en ce qu'**une galerie de toit peut être serrée entre l'équerre de serrage (6) et la zone d'appui (4).

15. Pied de serrage (2) selon la revendication 14,
**caractérisé par**
le contenu caractéristique de la caractéristique technique d'au moins une revendication ou de plusieurs revendications des revendications 2 à 10 ou 12 ou 13.
